# EUROPEAN PATENT APPLICATION

(11) **EP 1 890 441 A2**
(43) Date of publication of application: **20.02.2008**
(21) Application number: 07113033.0
(22) Date of filing: 24.07.2007
(51) Int. Cl.: H04L 12/56

(54) **Radio relay system and radio relay station**

(30) Priority: 18.08.2006 JP 2006222940
(71) Applicant: Fujitsu Ltd., Kawasaki-shi, Kanagawa 211-8588 (JP)
(72) Inventor: Yoshida, Makoto FUJITSU LIMITED, Kawasaki-shi, Kanagawa 211-8588 (JP); Saito, Tamio FUJITSU LIMITED, Kawasaki-shi, Kanagawa 211-8588 (JP)
(74) Representative: Wilding, Frances Ward

(57) **Abstract**

A radio relay system which relays a signal between a radio base station (BS) and a mobile terminal (MS) via a radio relay station (RS) is disclosed. The radio relay station (RS) stores a relay signal (MS#1 burst) received from the radio base station (BS) in a time slot of a BS→RS zone, and transmits the relay signal of a predetermined number of symbols (b) by making the predetermined number of symbols (b) delay by a predetermined number of symbols (a) to the mobile terminal without applying a data decoding process such as demodulation and error correction decoding to the relay signal. The position of the time slot of the relay signal to be transmitted in the RS-MS link is started from a position where the predetermined number of symbols (a) is delayed from a control signal (DL control).

## Description

### CROSS-REFERENCE TO RELATED APPLICATION

This application is based on Japanese Priority Patent Application No. 2006-222940, filed on August 18, 2006, the entire contents of which are herby incorporated herein by reference.

### BACKGROUND OF THE INVENTION

### 1. Field of the Invention

The present invention generally relates to a radio relay system and a radio relay station in which a radio signal is relayed between a radio base station and a mobile terminal in a mobile radio communication system.

### 2. Description of the Related Art

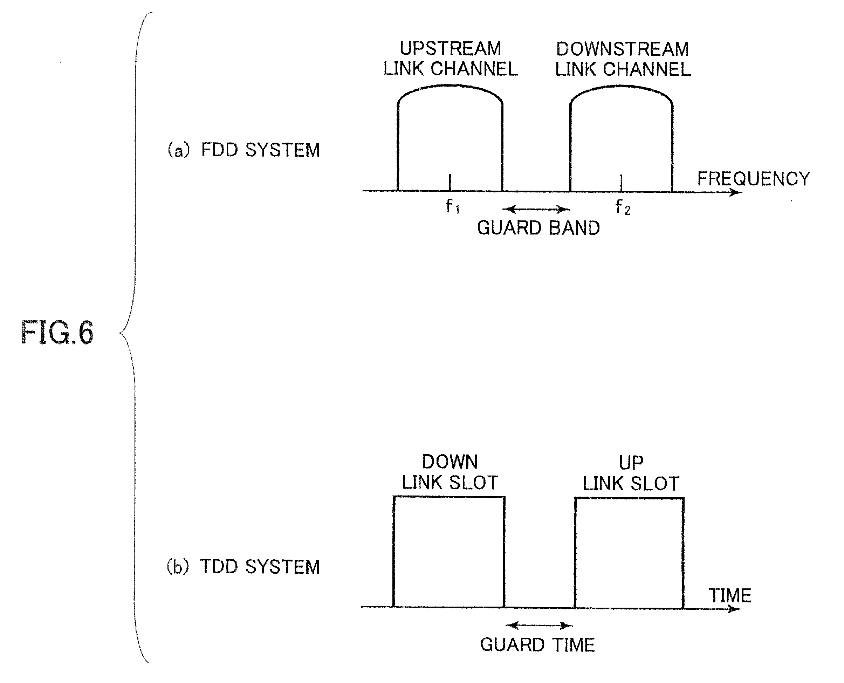

Radio signals are transmitted and received between a radio base station and a mobile terminal in a two-way communication system. Generally, in the two-way communication system, there are an FDD (frequency division duplex) system and a TDD (time division duplex) system. Fig. 6 is a diagram showing outlines of the FDD system and the TDD system. As shown in Fig. 6(a), in the FDD system, a downstream link for transmitting a signal from a radio base station to a mobile terminal and an upstream link for transmitting a signal from the mobile terminal to the radio base station are separated by channels on a frequency axis. In addition, as shown in Fig. 6(b), in the TDD system, the down link and the up link are separated by time slots on a time axis.

In a mobile radio communication system in which signals are transmitted and received between a radio base station and a mobile terminal, in order to expand a coverage, a radio relay system may be installed. In the radio relay system, a radio relay station relays signals which are transmitted and received between the radio base station and the mobile terminal.

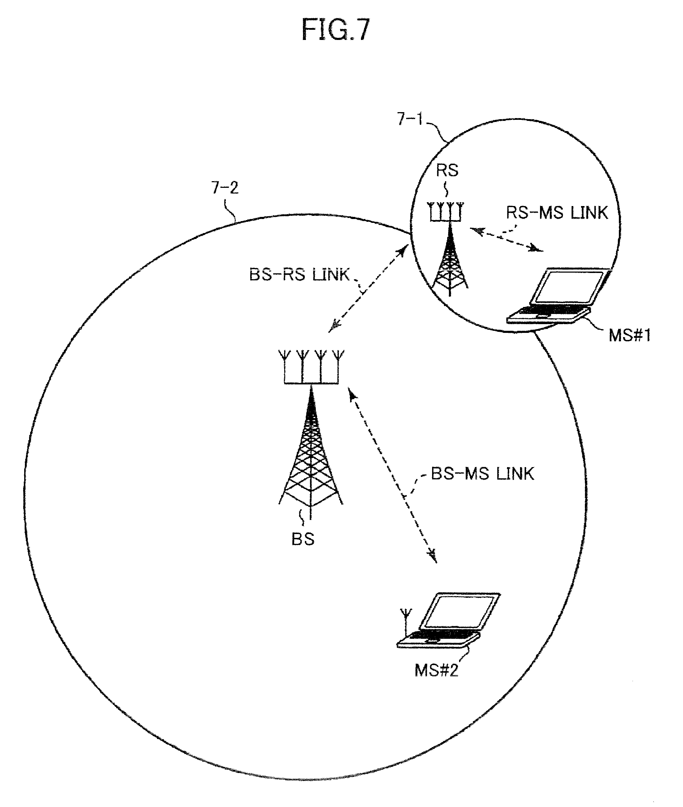

Fig. 7 is a diagram showing a radio relay system. In Fig. 7, a BS shows a radio base station, an RS shows a radio relay station, and MS#1 and MS#2 show mobile terminals. In addition, a BS-RS link connects the BS with the RS (first link), an RS-MS link connects the RS with the MS#1 (second link), and a BS-MS link connects the BS with the MS#2. By establishing the BS-RS link and the RS-MS link, the radio service area (coverage) which is covered by the BS can be expanded.

In addition, in Fig. 7, a service area 7-2 is called a normal service area in which the MS#2 can execute a network entry and data communications with the BS by directly exchanging control signals therebetween. A service area 7-1 is called a radio relay station cover area in which data communications can be executed between the BS and the MS#1 via the RS.

In operations in Fig. 7, the NS#1 executes data communications with the BS via the RS in the radio relay station cover area 7-1, and the MS#2 executes data communications with the BS by a direct connection in the normal service area 7-2.

When the FDD system is used in the radio relay system, since the RS uses independent different frequency channels in corresponding up and down links, transmission and reception of signals can be executed in one time slot. However, when the TDD system is used, the RS cannot transmit and receive signals at one time slot. That is, in the TDD system, a frequency division must be applied to the time slot. In other words, the uplink channel and the downlink channel must be completely separated; that is, filtering must be applied. However, applying the filtering to radio signals is difficult. Thus, generally, the minimum frequency up/down separation for FDD is required at least around 100MHz.

In Patent Document 1, a channel allocation method and a communication apparatus are disclosed. That is, in a mobile radio communication system using the FDD system and the TDD system, when both a channel in a service area based on a CDMA-FDD system and a channel in a service area based on a CDMA-TDD system are allocated, a suitable channel allocation method and a communication apparatus are realized.
[Patent Document 1] Japanese Laid-Open Patent Application No. 2006-191649

However, when a radio relay system is established by using the TDD system which cannot execute transmission and reception of signals at the one time slot, a time division is needed so that time slots of the BS-RS link and the BS-MS link in the normal service area 7-2 and a time slot of the RS-MS link in the radio relay station cover area 7-1 are not overlapped. That is, the BS-MS link, the BS-RS link, and the RS-MS link must be allocated into corresponding different zones.

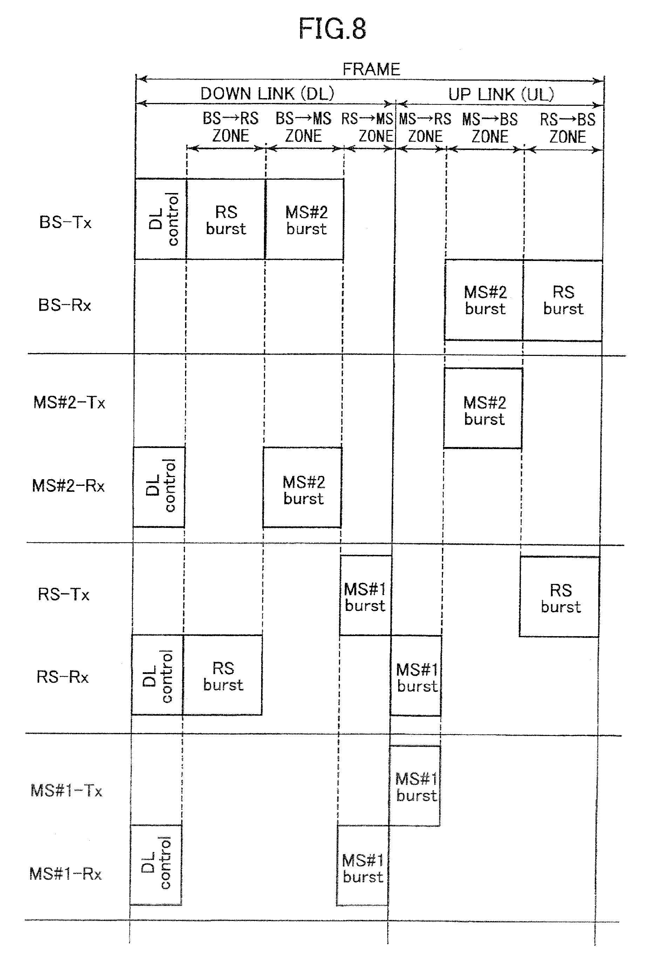

Fig. 8 is a diagram showing zones of links in time slots in the TDD system. As shown in Fig. 8, in order not to overlap the BS-RS link, the BS-MS link, and the RS-MS link in a time slot in the down link (DL) and the up link, the time slot is divided into zones.

That is, the time slot of the DL is divided into a DL control (down control signal) zone, a RS burst (burst signal from BS to RS (BS→RS)) zone, a MS#2 burst (burst signal from BS to MS (BS→MS)) zone, and a MS#1 burst (burst signal from RS to MS (RS→MS)) zone.

In addition, the time slot of the UL is divided into a MS#1 burst (burst signal from MS#1 to RS (MS→RS)) zone, a MS#2 burst (burst signal from MS#2 to BS (MS→BS)) zone, and a RS burst (burst signal from RS to BS (RS→BS)) zone.

In Fig. 8, from the top, the time slots ef a transmission signal from the BS (BS-Tx), a reception signal of the BS (BS-Rx), a transmission signal from the MS#2 (MS#2-Tx), a reception signal of the MS#2 (MS#2-Rx), a transmission signal from the RS (RS-Tx), a reception signal of the RS (RS-Rx), a transmission signal from the MS#1 (MS#1-Tx), and a reception signal of the MS#1 (MS#1-Rx) are shown.

In addition, in Fig. 8, the zones from the DL control to the RS burst (RS→BS) one frame. The zones shown in Fig. 8 are examples. For example, when the interference power between the BS-RS link and the BS-MS link is low, the BS→RS zone and the BS→MS zone can be multiplexed into one zone.

However, regardless of the interference power, in the TDD system, since the RS transmits a burst signal to the MS after receiving the burst signal from the BS, the RS burst (burst signal from BS to RS (BS→RS)) zone must always use a time slot different from the MS#1 burst (burst signal from RS to MS (RS→MS)) zone.

In addition, in the radio relay system using the TDD system, a delay in a relay process in the RS lowers the throughput in the mobile radio communication system. Since a sequence of transmission and reception of signals between the BS and the MS#1 is executed via the RS, the delay in the RS inevitably occurs.

When the RS demodulates a signal transmitted from the BS and transmits the signal to the MS by applying error correction decoding to the signal, the transmission of the signal cannot be executed in one frame. That is, a delay of one or more frames occurs, and the delay must be as short as possible.

Especially, even if the throughput in the transmission and reception of communication data is increased by using a highly efficient transmission system, the delay in the transmission and reception of control signals such as ACK/NACK signals and a retransmission control signal cannot be avoided in the RS. That is, the delay must be as short as

### SUMMARY OF THE INVENTION

Accordingly, the present invention may provide a radio relay system and a radio relay station in which the throughput in a mobile radio communication system is increased by minimizing the delay of a signal in a radio relay station in a TDD system. In addition, the structure of the radio relay station may be simple and the radio relay system may be easily installed.

According to one aspect of the present invention, there is provided a radio relay system which relays a signal between a radio base station and a mobile terminal via a radio relay station in a TDD (time division duplex) system. The radio relay system includes a storing unit that digitizes a first predetermined number of symbols of a relay signal received in a time slot of a first link which is used between the radio base station and the radio relay station and stores the digitized first predetermined number of symbols, and a transferring unit which makes the digitized first predetermined number of symbols delay by a second predetermined number of symbols, converts the delayed first predetermined number of symbols into an analog signal, and transfers the analog signal to the mobile terminal in a time slot of a second link.

According to another aspect of the present invention, the radio base station includes a transmitting unit which generates a control signal for the radio relay station having a synchronization signal for synchronizing transmission and reception of signals between the radio relay station and the mobile terminal and transmits the control signal for the radio relay station in a time slot of the first link. The storing unit of the radio relay station digitizes the first predetermined number of symbols of the relay signal including the control signal for the radio relay station received in the time slot of the first link and stores the digitized first predetermined number of symbols (b).

According to another aspect of the present invention, the radio base station determines to execute transmission by control corresponding to the lower of channel quality of the first link and channel quality of the second link by comparing the channel quality. In addition, the radio base station includes a measuring unit which measures channel quality of an up link and a down link in the first link, a measured result receiving unit which transmits a measurement request message for requesting the mobile terminal to measure channel quality of a down link and an up link in the second link and receives the measured results as a response to the measurement request message, and a detecting unit which detects the lower of the channel 1 quality in the up links in the first link and the second link and detects the lower of the channel quality in the down links in the first link and the second link.

According to another aspect of the present invention, there is provided a radio relay station which relays a signal between a radio base station and a mobile terminal in a TDD system. The radio relay station includes a storing unit that digitizes a first predetermined number of symbols of a relay signal received in a time slot of a first link which is used between the radio base station and the radio relay station and stores the digitized first predetermined number of symbols; and a transferring unit which makes the digitized first predetermined number of symbols delay by a second predetermined number of symbols, converts the delayed first predetermined number of symbols into an analog signal, and transfers the analog signal to the mobile terminal in a time slot of a second link.

According to another aspect of the present invention, the storing unit digitizes the first predetermined number of symbols of the relay signal including a synchronization signal for synchronizing signals of transmission and reception between the radio base station and the mobile terminal transmitted in the time slot of the first link and stores the digitized first predetermined number of symbols.

According to another aspect of the present invention, there is provided a radio relay station which relays a signal between a radio base station and a mobile terminal in a TDD system. The radio relay station includes an analog to digital converter which converts an analog relay signal received from the radio base station in a time slot of a first link into a digital relay signal; a frame synchronization signal detecting section which detects a synchronization signal including in the received relay signal; a relay symbol storing unit which stores a first predetermined number of symbols of the digital relay signal converted at the analog to digital converter based on a frame head address in the synchronization signal such as a preamble, detected by the frame synchronization signal detecting section and makes the first predetermined number of symbols delay by a second predetermined number of symbols; and a digital to analog converter which converts the digitized first predetermined number of symbols read from the relay symbol storing unit into an analog signal.

According to another aspect of the present invention, the radio relay station further includes a decoding circuit which decodes control information transmitted from the radio base station; and a parameter storing unit which stores a new first predetermined number of symbols and a new second predetermined number of symbols by extracting the numbers from the control information decoded by the decoding circuit. The relay symbol storing unit uses the new first predetermined number of symbols and the new second predetermined number of symbols read from the parameter storing unit.

According to an embodiment of the present invention, a radio relay station stores a relay signal received from a radio base station and transmits a first predetermined number of symbols of the relay signal to a mobile terminal by making the first predetermined number of symbols delay by a second predetermined number of symbols without applying a decoding process such as a demodulating process and an error correction decoding process to the relay signal. Therefore, the radio relay can be executed while minimizing the delay, and the relay signal received from the radio base station can be transmitted to the mobile terminal in the same frame as the frame in which the relay signal is received. In addition, a radio relay system can be realized which system is synchronized with all the mobile terminals in service areas managed by the radio base station.

In addition, since one relay signal is transmitted in the BS-RS link and the RS-MS link, the radio base station can easily manage all the mobile terminals and can execute optimal transmission control based on channel quality. Further, in the radio relay station, since only necessity minimum functions are installed, the structure thereof is simple. Further, in the radio relay station, the amount of signals to be processed is small and the cost can be low. Further, in the OFDMA based transmission system, it may be added FFT after analog to digital conversion and IFFT before digital to analog conversion in order to deal with OFDMA data if in-frame operation can be done.

Other objects and further features of the present invention will be apparent from the following detailed description when read in conjunction with the accompanying drawings.

### BRIEF DESCRIPTION OF THE DRAWINGS

Fig. 1 is a diagram showing relay operations in a radio relay system according to an embodiment of the present invention;
Fig. 2 is a diagram showing relay operations including a control signal for a radio relay station in the radio relay system according to the embodiment of the present invention;
Fig. 3 is a diagram showing a relationship between a link and channel quality according to the embodiment of the present invention;
Fig. 4 is a diagram showing measuring and informing operations of the channel quality according to the embodiment of the present invention;
Fig. 5 is a block diagram showing a a radio relay station according to the embodiment of the present invention;
Fig. 6 is a diagram showing outlines of a FDD system and a TDD system;
Fig. 7 is a diagram showing a radio relay system; and
Fig. 8 is a diagram showing zones of links in time slots in the TDD system.

### DESCRIPTION OF THE PREFERRED EMBODIMENT

Referring to the drawings, an embodiment of the present invention is described.

In the embodiment of the present invention, the radio relay system shown in Fig. 7 is used. In Fig. 7, one BS, one RS, and two MS are shown; however, plural BS, plural RS, and three or more MS can be included in the radio relay system.

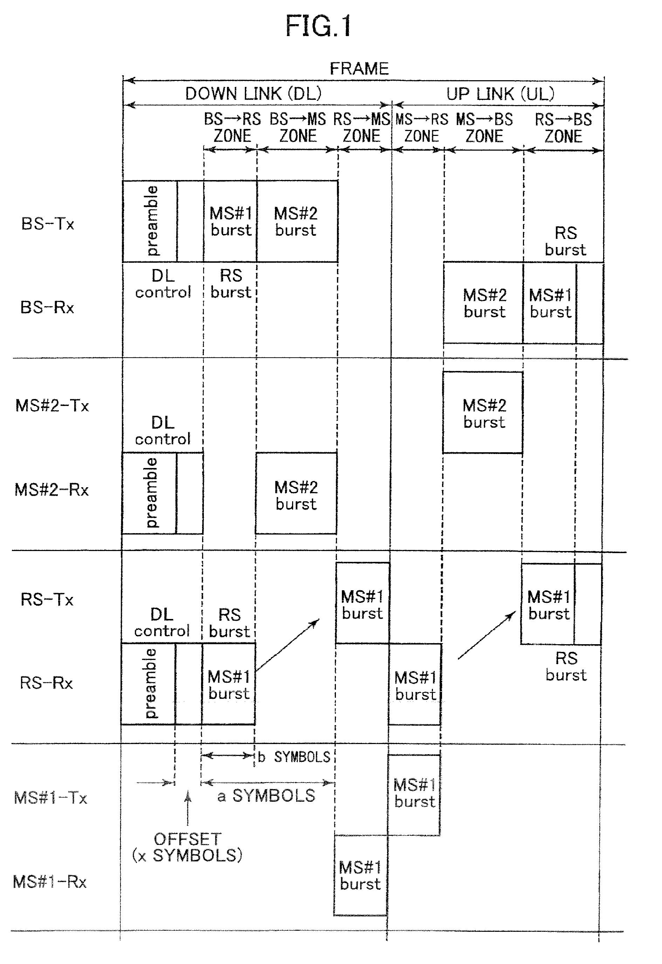

Fig. 1 is a diagram showing relay operations in the radio relay system according to the embodiment of the present invention. As shown in Fig. 1, an RS receives a signal to be relayed from a BS to a MS#1 in the BS-RS zone and stores a relay signal MS#1 burst in a predetermined time slot, delays the MS#1 burst by the number of delay symbols "a" and transmits the delayed MS#1 burst of the number of relay symbols "b".

That is, the RS transmits the relay signal to the MS#1 without demodulating the received signal and applying error correction decoding to the received signal after storing the signals for a predetermined period. The start position of a time slot in the BS-RS link of the relay signal MS#1 burst to be relayed is determined in the following. That is, first, the head address of the frame is detected by a frame synchronization signal in the control signal DL control, the number of offset symbols "x" is determined from "preamble" in the DL control, and the relay signal MS#1 burst is started after the number of offset symbols "x". The number of offset symbols "x" is fixed in the radio relay system.

In the detection of the synchronization signal, only a bit pattern of the control signal DL control is detected and decoding is not applied to the relay signal. Therefore, delay of the relay signal rarely occurs. That is, in the radio relay system, the delay can be minimized.

In addition, parameters of the number of offset symbols "x", the number of delay symbols "a", and the number of relay symbols "b" can be arbitrarily changed by control information which is transmitted and received between the BS and the RS while using an information exchange channel. When the control information must be obtained by decoding the received signal, a circuit for decoding the control information is provided. In addition, when the parameters must be obtained by decoding the received signal, a circuit for decoding the received signal is provided.

One frame or more delay may occur in the decoding process for obtaining the parameters "x", "a", and "b". In this case, the BS predicts a time which is required in the decoding process in the RS and the BS starts to transmit the relay signal MS#1 burst by the changed parameters "x", "a", and "b" at the timing when decoding the control information of the parameters is finished and the parameters are changed. With this, the parameters "x", "a", and "b" can be changed at a suitable timing.

In the above, the relay in the down link is described. Similar to the above, in the relay in the up link, the RS receives a signal from the MS#1 in the MS→RS link and transmits the signal to the BS in the RS→BS link by delaying the signal by a predetermined time. With this, the signal can be relayed in one frame with a minimum delay.

In Fig. 1, a case exists in which the MS#1 cannot receive a control signal from the BS. That is, in Fig. 7, the MS#1 is positioned outside the normal service area 7-2 of the BS. In this case, the MS#1 must receive and transmit signals by synchronizing with a control signal from the RS.

In this case, basically, the RS must generate a control signal including a synchronization signal and transmit the control signal to the MS#1. However, the BS generates the control signal including the synchronization signal as a control signal for the RS and transmits the control signal for the RS to the RS in the BS-RS link. With this, the RS can use the control signal for the RS as it is and can transmits the control signal to the MS#1 without decoding.

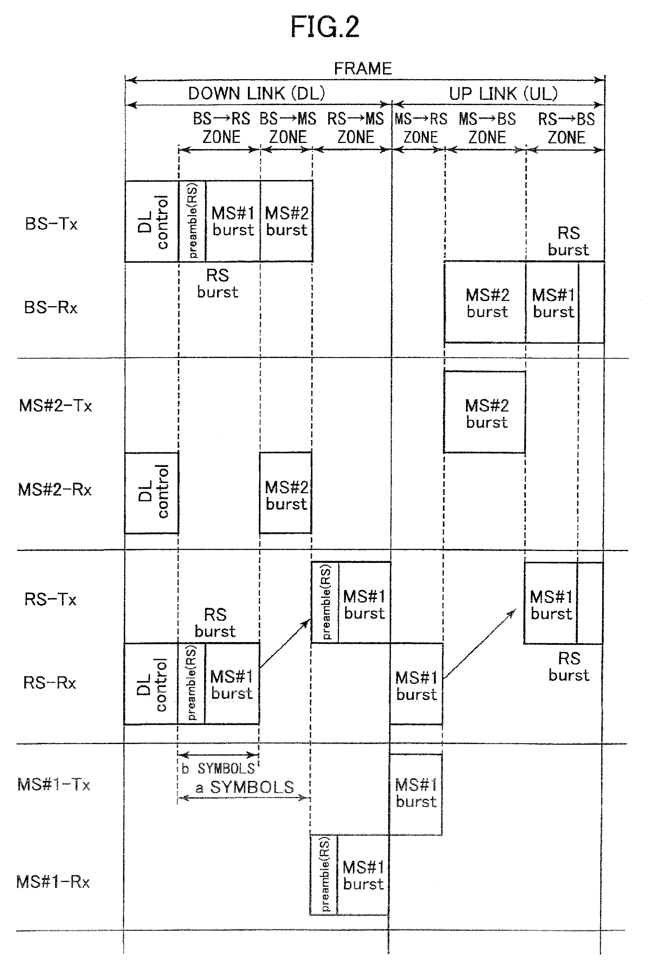

Fig. 2 is a diagram showing relay operations including a control signal for the radio relay station in the radio relay system according to the embodiment of the present invention. In Fig. 2, in order to simplify the diagram, the number of offset symbols "x" is omitted. The RS transmits a relay signal RS burst of the number of relay symbols "b" to the MS#1 by delaying the number of delay symbols "a" which is predetermined in the radio relay system. The RS burst includes a control signal for RS (preamble (RS)) and a downlink signal to the MS#1 (MS#1 burst).

As described above, the RS relays the RS burst to the MS#1 without decoding the control signal and the communication data. Therefore, delay of the signal in the RS is minimized. In this, a frame synchronization signal is not decoded, due to only detecting the synchronization signal.

Next, transmission control corresponding to channel quality is described. As shown in Fig. 7, two radio links BS-RS link and RS-MS link exist in the radio relay system. The channel quality in the radio link is momentarily changed due to influences such as fading corresponding to movement of the MS. Therefore, AMC (adaptive modulation and coding) may be used in the radio relay system. In AMC, a modulation system and a coding rate (error correcting capability) are changed corresponding to the channel quality.

In the embodiment of the present invention, in order to simplify processes and functions in the RS, AMC is not used corresponding to the channel quality of the RS-MS link; however, in the BS, optimal AMC is used corresponding to low channel quality in the BS-RS link or the RS-MS link. Therefore, the RS only executes relay processes without executing the decoding process.

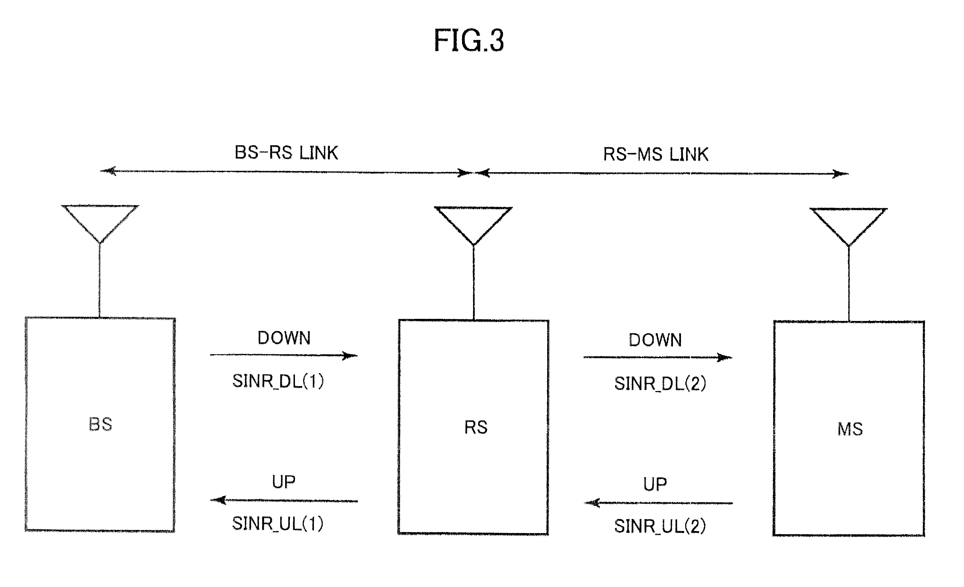

Fig. 3 is a diagram showing a relationship between a link and channel quality according to the embodiment of the present invention. In Fig. 3, the channel quality in the down link of the BS-RS link is shown as a SINR_DL(1), the channel quality in the up link of the BS-RS link is shown as a SINR_UL(1), the channel quality in the down link of the RS-MS link is shown as a SINR_DL(2), and the channel quality in the up link of the RS-MS link is shown as a SINR_UL(2).

In the down link, when the SINR_DL(1) is lower than the SINR_DL(2), signals are transmitted by AMC corresponding to the SINR_DL(1), and when the SINR_DL(2) is lower than the SINR_DL(1), signals are transmitted by AMC corresponding to the SINR DL(2). In the up link, the same determination as that in the down link is used.

In the TDD system, since the same frequency is used in the up link and the down link, correlation between the channel quality of the up link and the channel quality of the down link is relatively high. Therefore, in the BS-RS link and the RS-MS link, one of the channel quality in the up link and the down link may be used.

When the BS centrally controls AMC, the BS must collect channel quality information, for example, SINR (signal-to-interference and noise ratio) in the BS-RS link and the RS-MS link.

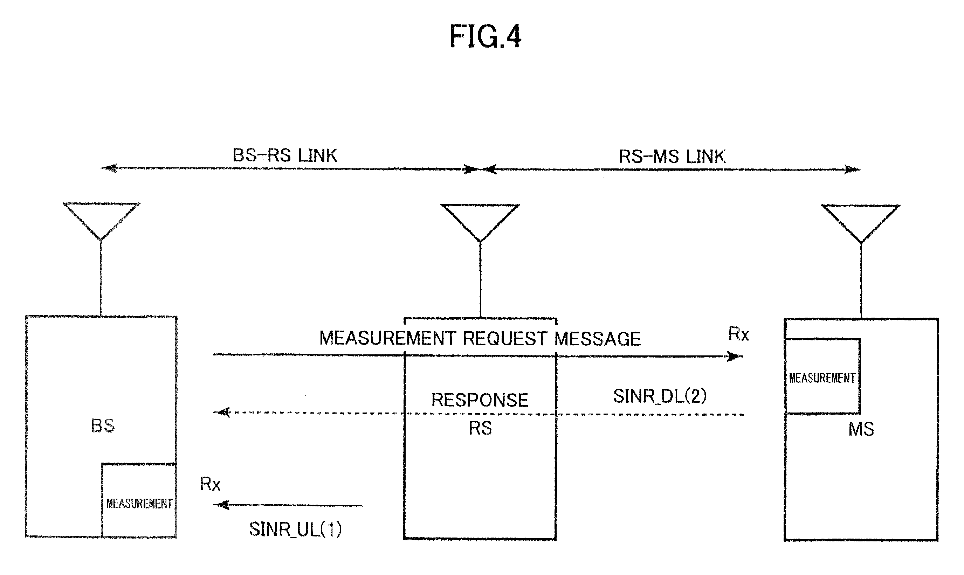

Fig. 4 is a diagram showing measuring and informing operations of channel quality according to the embodiment of the present invention.

In order that the BS collects the channel quality information so that the RS does not decode signals, as shown in Fig. 4, the BS measures the channel quality SINR_UL(1) in the up link of the BS-RS link. In addition, in order that the MS measures the channel quality SINR_DL(2) in the down link of the RS-MS link, the BS transmits a measurement request message to the MS. The MS measures the channel quality SINR_DL(2) in the down link of the RS-MS link based on the measurement request message and transmits the measured channel quality information to the BS as a response message.

Similar to the above, the channel quality SINR_DL(1) is measured by the BS and the channel quality SINR_UL(2) is measured by the MS.

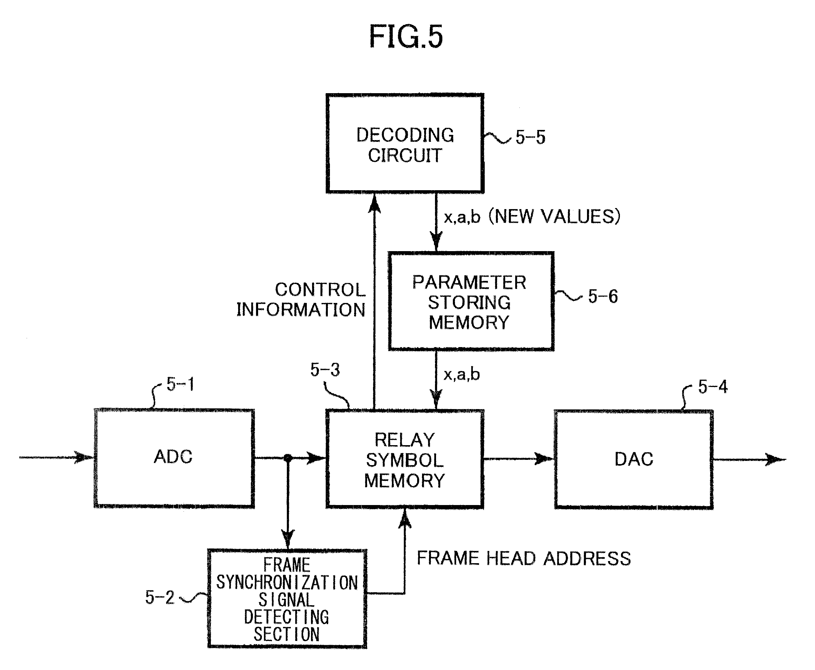

Fig. 5 is a block diagram showing a radio relay station according to the embodiment of the present invention.

As shown in Fig. 5, the radio relay station includes an ADC (analog to digital converter) 5-1, a frame synchronization signal detecting section 5-2, a relay symbol memory 5-3, a DAC (digital to analog converter) 5-4, a decoding circuit 5-5, and a parameter storing memory 5-6.

The ADC 5-1 converts a relay signal to a digital signal which relay signal is received from a BS in a time slot of a BS-RS link (first link). The frame synchronization signal detecting section 5-2 detects a frame synchronization signal including in the relay signal. The relay symbol memory 5-3 stores the predetermined number of symbols of the relay signal converted by the ADC 5-1 based on a frame head address detected by the frame synchronization signal detecting section 5-2, and delays the stored predetermined number of symbols by another predetermined number of symbols. The DAC 5-4 converts the predetermined number of symbols read from the relay symbol memory 5-3 into an analog signal.

The frame head address in the relay symbol memory 5-3 is determined by the following. A frame signal including in a control signal transmitted from the BS is converted into a digital signal by the ADC 5-1 and the frame synchronization signal detecting section 5-2 detects the frame synchronization signal from the digital signal. Then the frame head address is set in the relay symbol memory 5-3.

As the relay symbol memory 5-3, for example, a dual port RAM is used. The relay symbol memory 5-3 stores the relay signal (MS#1 burst) of the number of relay symbols "b". The relay signal is delayed from the position of the frame synchronization signal by the number of offset symbols "x" and further delayed by the number of delay symbols "a" from the position of the number of offset symbols "x". The digital signal stored in the relay symbol memory 5-3 is converted into an analog signal by the DAC 5-4. With this, the relay signal MS#1 burst can be transmitted by being delayed the number of delay symbols "a" from the position of the number of offset symbols "x" in one frame.

The radio relay station can be formed by the following in one frame.

The parameters "x", "a", and "b"; which are the number of offset symbols, the number of delay symbols, and the number of relay symbols; are predetermined by the radio relay system and are stored in the parameter storing memory 5-6.

The BS transmits control information for determining new parameters in addition to the relay signal to the radio relay station. The decoding circuit 5-5 decodes the control information. The radio relay station extracts the new parameters "x", "a", and "b" from the control information decoded by the decoding circuit 5-5 and stores the new parameters in the parameter storing section 5-6. The relay symbol memory 5-3 uses the relay signal formed by the newly stored parameters.

In this case, a delay occurs in the decoding process in the decoding circuit 5-5. Therefore, the parameters can be changed to new parameters from a frame which is delayed by the decoded delay which is preliminarily given by the system. The BS transmits a relay signal by delaying the decoded delay. With this, the relay signal having the new parameters can be synchronized.

Further, the present invention is not limited to the specifically disclosed embodiment, and variations and modifications may be made without departing from the scope of the present invention.

## Claims

1. A radio relay system which relays a signal between a radio base station (BS) and a mobile terminal (MS) via a radio relay station (RS) in a TDD (time division duplex) system, **characterized in that** the radio relay station (RS) includes
a storing unit that digitizes a first predetermined number of symbols (b) of a relay signal received in a time slot of a first link (BS-RS link) which is used between the radio base station (BS) and the radio relay station (RS) and stores the digitized first predetermined number of symbols (b); and
a transferring unit which makes the digitized first predetermined number of symbols (b) delay by a second predetermined number of symbols (a), converts the delayed first predetermined number of symbols (b) into an analog signal, and transfers the analog signal to the mobile terminal (MS) in a time slot of a second link (RS-MS link).

2. The radio relay system as claimed in claim 1, **characterized in that** the radio base station (BS) includes
a transmitting unit which generates a control signal for the radio relay station (RS) having a synchronization signal for synchronizing transmission and reception of signals between the radio relay station (RS) and the mobile terminal (MS) and transmits the control signal for the radio relay station (RS) in a time slot of the first link (BS-RS link); and
the storing unit of the radio relay station (RS) digitizes the first predetermined number of symbols (b) of the relay signal including the control signal for the radio relay station (RS) received in the time slot of the first link (BS-RS link) and stores the digitized first predetermined number of symbols (b).

3. The radio relay system as claimed in claim 1, **characterized in that** the radio base station (BS) determines to execute transmission by control corresponding to the lower of channel quality of the first link (BS-RS link) and channel quality of the second link (RS-MS link) by comparing the channel quality.

4. The radio relay system as claimed in claim 3, **characterized in that** the radio base station (BS) includes
a measuring unit which measures channel quality of an up link (SINR_UL(1)) and channel quality of a down link (SINR_DL(1) of the first link (BS-RS link);
a measured result receiving unit which transmits a measurement request message for requesting the mobile terminal (MS) to measure channel quality of a down link (SINR_DL(2)) and channel quality of an up link (SINR_UL(2) of the second link (RS-MS link) and receives the measured results as a response to the measurement request message; and
a detecting unit which detects the lower of the channel quality in the up links in the first link (BS-RS link) and the second link (RS-MS link) and detects the lower of the channel quality in the down links in the first link (BS-RS link) and the second link (RS-MS link).

5. A radio relay station which relays a signal between a radio base station (BS) and a mobile terminal (MS) in a TDD system, the radio relay station (RS) **characterized by**:
a storing unit that digitizes a first predetermined number of symbols (b) of a relay signal received in a time slot of a first link (BS-RS link) which is used between the radio base station (BS) and the radio relay station (RS) and stores the digitized first predetermined number of symbols (b); and
a transferring unit which makes the digitized first predetermined number of symbols (b) delay by a second predetermined number of symbols (a), converts the delayed first predetermined number of symbols (b) into an analog signal, and transfers the analog signal to the mobile terminal (MS) in a time slot of a second link (RS-MS link).

6. The radio relay station as claimed in claim 5, **characterized in that** the storing unit digitizes the first predetermined number of symbols (b) of the relay signal including a synchronization signal for synchronizing signals of transmission and reception between the radio base station (BS) and the mobile terminal (MS) transmitted in the time slot of the first link (BS-RS link) and stores the digitized first predetermined number of symbols (b).

7. A radio relay station which relays a signal between a radio base station (BS) and a mobile terminal (MS) in a TDD system, the radio relay station (RS) **characterized by**:
an analog to digital converter (5-1) which converts an analog relay signal received from the radio base station (BS) in a time slot of a first link (BS-RS link) into a digital relay signal;
a frame synchronization signal detecting section (5-2) which detects a synchronization signal including in the received relay signal;
a relay symbol storing unit (5-3) a which stores a first predetermined number of symbols (b) of the digital relay signal converted at the analog to digital converter (5-1) based on a frame head address in the synchronization signal detected by the frame synchronization signal detecting section (5-2) and makes the first predetermined number of symbols (b) delay by a second predetermined number of symbols (a); and
a digital to analog converter (5-4) which converts the digitized first predetermined number of symbols (b) read from the relay symbol storing unit (5-3) into an analog signal.

8. The radio relay station as claimed in claim 7, further **characterized by**:
a decoding circuit (5-5) which decodes control information transmitted from the radio base station (BS); and
a parameter storing unit (5-6) which stores a new first predetermined number of symbols (b) and a new second predetermined number of symbols (a) by extracting the numbers from the control information decoded by the decoding circuit (5-5); **characterized in that** the relay symbol storing unit (5-3) uses the new first predetermined number of symbols (b) and the new second predetermined number of symbols (a) read from the parameter storing unit (5-6).
